(19) Europäisches Patentamt
European Patent Office
Office européen des brevets

(11) **EP 2 459 995 B1**

(12) **FASCICULE DE BREVET EUROPEEN**

(45) Date de publication et mention de la délivrance du brevet:
**20.04.2016 Bulletin 2016/16**

(21) Numéro de dépôt: **10752053.8**

(22) Date de dépôt: **20.07.2010**

(51) Int Cl.:
***G01N 27/04*** *(2006.01)*

(86) Numéro de dépôt international:
**PCT/FR2010/051526**

(87) Numéro de publication internationale:
**WO 2011/012794 (03.02.2011 Gazette 2011/05)**

(54) **PROCEDE DE CARACTERISATION ELECTRIQUE D'UN MATERIAU COMPOSITE POUR LA FABRICATION D'UN AERONEF**

VERFAHREN ZUR ELEKTRISCHEN CHARAKTERISIERUNG EINES VERBUNDSTOFFES FÜR DIE HERSTELLUNG EINES FLUGZEUGS

METHOD OF ELECTRICALLY CHARACTERIZING A COMPOSITE FOR THE MANUFACTURE OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **31.07.2009 FR 0955433**

(43) Date de publication de la demande:
**06.06.2012 Bulletin 2012/23**

(73) Titulaire: **Airbus Operations**
**31000 Toulouse (FR)**

(72) Inventeurs:
• **PONS, François**
**F-31840 AUSSONNE (FR)**
• **LARROSE, Nicolas**
**F-31140 Launaguet (FR)**

(74) Mandataire: **Potdevin, Emmanuel Eric**
**LLR**
**11 boulevard de Sébastopol**
**75001 Paris (FR)**

(56) Documents cités:
**EP-A1- 2 034 308      DE-A1- 10 234 172**
**DE-C1- 3 622 656      FR-A1- 2 630 545**
**US-A- 4 924 187**

• **HAUG R ET AL: "METHODE DE MESURE ELECTRIQUE DE LA DURETE D'UN MATERIAU", MEASUREMENT SCIENCE AND TECHNOLOGY, IOP, BRISTOL, GB, vol. 2, no. 3, 1 mars 1991 (1991-03-01), pages 247-252, XP000219435, ISSN: 0957-0233**

**Description**

L'invention concerne les matériaux composites utilisés dans la fabrication des aéronefs.

On cherche aujourd'hui à fabriquer des aéronefs au moyen de matériaux composites, en particulier en raison de leur poids réduit et de leurs propriétés mécaniques. Ces matériaux composites sont formés d'une matrice en matière synthétique par exemple en résine epoxy, dans laquelle sont noyées des fibres telles que des fibres de carbone.

Lorsqu'un tel matériau doit entrer dans la construction d'un avion, il est utile de connaître son comportement en matière de résistance électrique. A cette fin, on procède aujourd'hui de la façon suivante. On réalise un barreau de matériau composite formé d'un empilement de plusieurs plis. Ce nombre de plis est connu et les plis sont orientés par exemple selon la séquence 45°/0°/-45°/90°.... On réalise aux deux extrémités du barreau un dépôt électrolytique d'un métal bon conducteur de l'électricité. Au moyen d'un voltmètre, on mesure la différence de potentiel régnant entre ces deux dépôts pendant qu'on alimente en courant électrique le barreau monté en série avec un ampèremètre. La connaissance de la tension et de l'intensité du courant permet donc d'obtenir la résistance du barreau selon la loi d'Ohm R = U/I.

Il s'avère toutefois relativement difficile d'effectuer le dépôt électrolytique aux extrémités du barreau. En effet, cette opération est longue, onéreuse et sans garantie de fiabilité. En particulier, la qualité du traitement de surface constitué par ce dépôt électrolytique est conditionnée en grande partie par le soin apporté à la préparation du barreau, ce qui implique en pratique la mise en oeuvre d'une dizaine d'étapes différentes pour que ce dépôt soit fait correctement. Ces étapes font appel à des personnes et à des moyens spécifiques qui donnent à cette prestation en elle-même un coût non négligeable. De plus, on observe que les résultats fournis sont parfois incohérents et dépendent en réalité de la qualité du dépôt effectué. En outre, sachant que l'introduction de courant et la mesure de tension aux extrémités du barreau est faite avec des pinces, le dépôt électrolytique vieillit rapidement, ce qui rend l'expérimentation parfois difficile à répéter.

Le document DE-10234172 divulgue un procédé de caractérisation électrique d'un matériau au moyen de deux cales. Le document FR-2 630 545 divulgue de suivre l'évolution de la résistance électrique de fibres d'un matériau composite d'une pièce d'aéronef.

Un but de l'invention est de faciliter la caractérisation électrique d'un matériau composite.

A cet effet, on prévoit, selon l'invention, un procédé selon la revendication 1 de caractérisation électrique d'un matériau composite pour la fabrication d'un aéronef, dans lequel :

- on comprime deux cales contre au moins une éprouvette réalisée en un matériau composite,
- on détermine une valeur de résistance électrique de l'ensemble formé par les cales et l'éprouvette, et
- on déduit de la valeur une valeur de résistance électrique du matériau composite.

Ainsi, le dépôt électrolytique est remplacé par la mise en place d'une pression de contact entre les cales et l'éprouvette. Le contact entre chaque cale et l'éprouvette fait certes naître une résistance électrique de contact. Toutefois, cette grandeur peut au choix être maitrisée ou éliminée par les calculs de sorte que ce mode opératoire permet d'obtenir de façon fiable une valeur de résistance électrique du matériau composite. Ce procédé est plus facile et plus rapide à mettre en oeuvre que celui associé au dépôt électrolytique. Il fournit des résultats fiables et les mesures sont reproductibles.

Avantageusement, on effectue la compression de sorte que la ou chaque éprouvette est soumise à une pression de contact dépassant un seuil prédéterminé.

On a en effet constaté de façon surprenante que, lorsqu'on augmentait l'effort de compression auquel est soumise l'éprouvette entre les cales, la résistance électrique de l'ensemble baissait rapidement pour approcher une asymptote. Cela montre que la résistance électrique de contact entre chaque cale et l'éprouvette demeure sensiblement constante lorsque la pression a dépassé le seuil et même peut devenir une grandeur négligeable. Ainsi, l'existence de la résistance électrique de contact ne fait pas obstacle à la caractérisation de la résistance du matériau composite en lui-même.

Toujours selon la revendication 1, on introduit au moins une des cales dans un orifice de la ou chaque éprouvette et on réalise un ajustement serré entre la cale et l'orifice.

Il s'agit ainsi d'un montage simple et commode pour réduire la résistance électrique de contact entre chaque cale et l'éprouvette.

Avantageusement, la cale présente un diamètre supérieur à un diamètre de l'orifice.

De préférence, le diamètre c de la cale et le diamètre e de l'orifice vérifient :

$$(c-e)/c \geq 0,0025$$

Ainsi la résistance électrique de contact entre chaque cale et l'éprouvette devient négligeable.

De préférence, on effectue la compression sur au moins deux éprouvettes réalisées en un même matériau composite.

Ainsi, en combinant les résultats obtenus avec les éprouvettes, on peut éliminer des calculs la résistance électrique de contact et donc se dispenser de prendre en compte ce paramètre.

Avantageusement, on effectue successivement la compression des deux éprouvettes en conservant inchangé l'emplacement de l'une des cales.

On réduit ainsi le nombre de manipulations. De plus, en réduisant les ruptures de contact entre les cales et les éprouvettes, on améliore la fiabilité des résultats.

De préférence, les deux éprouvettes font partie d'une même pièce.

On réduit ainsi les risques de voir apparaître des différences de propriété dans les deux éprouvettes et on améliore la fiabilité des résultats.

De préférence les cales sont au nombre de trois et on dispose les trois cales sur la pièce à des emplacements alignés entre eux.

Cette méthode permet d'obtenir par des calculs particulièrement simples une valeur de résistance électrique du matériau.

On prévoit également selon l'invention un programme d'ordinateur comprenant des instructions de code, le rendant apte à commander la mise en oeuvre de certaines au moins des étapes du procédé de l'invention lorsqu'il est exécuté sur un ordinateur.

On prévoit également selon l'invention un support d'enregistrement de données, comprenant un tel programme sous forme enregistrée.

On prévoit aussi selon l'invention la mise à disposition d'un tel programme sur un réseau de télécommunications en vue de son téléchargement.

On prévoit en outre selon l'invention un procédé selon la revendication 8.

On prévoit également, selon l'invention, une installation de caractérisation électrique d'un matériau composite pour la fabrication d'un aéronef, l'installation comprenant :

- au moins deux cales,
- des moyens pour comprimer les deux cales contre une éprouvette, et
- des moyens pour déterminer une valeur de résistance électrique de l'ensemble formé par les cales et l'éprouvette.

On prévoit encore un aéronef fabriqué au moyen d'un matériau composite caractérisé électriquement au moyen d'un procédé selon l'invention.

De préférence, l'aéronef comprend un équipement électrique connecté à la pièce et agencé de sorte qu'un circuit de courant de défaut de l'équipement passe par la pièce.

Cela trouve à s'appliquer par exemple dans le contexte suivant.

Un avion comprend de très nombreux équipements ou appareils électriques de différentes natures. Il peut s'agir de moteurs ou encore de dispositifs électroniques tels que des ordinateurs.

Parmi ces équipements, de nombreux sont alimentés en courant électrique monophasé. A cette fin, l'équipement est connecté au pôle positif du générateur au moyen d'un câble. Quant à la connexion au pôle négatif du générateur, elle se fait en connectant l'autre pôle de l'équipement à la masse métallique de l'avion à laquelle le pôle négatif du générateur est lui aussi relié. Il s'agit là du circuit des courants dits fonctionnels.

Il est nécessaire de prévoir aussi l'évacuation d'éventuels courants de défaut relatifs aux équipements. Ce type de courant est par exemple un courant de fuite ou un courant de court-circuit et peut apparaître en cas d'anomalie. Lorsque la majeure partie de l'avion est réalisée en métal, les courants de défaut peuvent être évacués de la même façon que les courants fonctionnels, l'équipement étant relié à des pièces métalliques de l'avion.

Mais il en va différemment lorsqu'on souhaite réaliser une partie de l'avion en matériau composite qui comprend une matrice en matière plastique renforcée par des fibres non métalliques. Un tel matériau est en effet moins bon conducteur du courant électrique que le métal.

Pour connecter à la masse métallique de l'appareil les équipements présents sur ce type d'avion et ainsi évacuer les courants fonctionnels, chaque équipement est relié à cette masse au moyen d'un câble spécifique. Ainsi, il est connu d'envisager un réseau métallique spécifique, parfois désigné, au niveau du fuselage, par le terme réseau électrique de structure ou en anglais *electrical structure network* ou ESN.

Par ailleurs, il faut prévoir qu'un éventuel courant de défaut de l'équipement puisse rejoindre la masse métallique. A cette fin, on utilise un réseau spécifique appelé réseau métallique de défaut, en anglais *metallic bonding network* ou MBN. Ce réseau se confond en partie avec des pièces métalliques structurales de l'avion telles que des rails de sièges pour réaliser un maillage de l'avion permettant d'évacuer les courants de défaut des équipements. Dans ce contexte, il est connu de prévoir des composants spécifiques tels que des rubans métalliques sur chaque cadre et chaque poutre transverse de l'avion afin d'assurer, malgré la présence du matériau composite, une continuité électrique entre les pièces métalliques qui permette l'évacuation des courants de défaut par la masse de l'avion.

Mais la somme de ces éléments métalliques forme toutefois un maillage complexe et pose de nombreux problèmes. Ainsi, l'ajout des composants spécifiques engendre une augmentation du poids de l'avion. Il augmente la durée de l'ensemble des opérations de montage. Le coût associé est non négligeable. Ces éléments rendent aussi plus complexe le réseau de retour de courant. Enfin, ces éléments nécessitent des études spécifiques relatives au dimensionnement, à la maintenance, à la corrosion et au raccordement des parties de l'ESN entre elles.

C'est pourquoi avantageusement, on prévoit que l'aéronef comprend au moins un équipement électrique et une pièce en matériau composite à laquelle l'équipement est connecté, le matériau composite ayant été caractérisé au moyen de l'invention, l'aéronef étant agencé de sorte qu'un circuit de courant de défaut de l'équipement passe par la pièce.

Ainsi, l'évacuation des éventuels courants de défaut de l'équipement se fait au moyen d'un réseau mixte formé en matériau composite et en métal. La partie métallique du réseau correspond à la masse métallique de l'aéronef. Il s'agit du réseau principal. La ou les pièces en matériau composite forment un réseau d'acheminement permettant de diriger le courant de défaut vers ce réseau principal. Ce sont donc les pièces en matériau composite elles-mêmes qui servent pour l'évacuation des courants de défaut des équipements. On tire parti du fait que les propriétés électriques des matériaux composites à bord des aéronefs ne leur permettent pas d'évacuer vers la masse de l'aéronef les courants fonctionnels, mais leur permettent en revanche d'évacuer des courants de défaut. La mise en oeuvre ne nécessite pas l'ajout d'un grand nombre de composants spécifiques. Elle n'engendre pas un surpoids ni ne nécessite d'augmenter de façon substantielle la durée des opérations de montage. Il n'y a pas de surcoût substantiel et le réseau de retour de courant ne se trouve pas compliqué. Enfin, il n'est pas nécessaire de prévoir les études précitées pour le raccordement des parties de l'ESN entre elles. Le matériau composite aura été caractérisé comme indiqué plus haut pour permettre son utilisation dans cette application.

Avantageusement, l'aéronef comprend au moins un organe de contact connecté à l'équipement et assemblé à la pièce au moyen d'un ajustement serré de l'organe avec la pièce.

Ainsi, on assure une bonne connexion de l'équipement à la pièce en matériau composite en vue de permettre une évacuation convenable des courants de défaut. Plus précisément, cet ajustement permet de rendre minime voire négligeable la résistance de contact entre l'organe et la pièce, ce qui facilite l'évacuation des courants de défaut par la pièce en matériau composite.

De préférence, l'organe de contact s'étend dans un orifice de la pièce, un diamètre $v$ de l'organe et un diamètre e de l'orifice vérifiant : $(v-e)/v \geq 0,0025$

Cette relation entre les diamètres assure que la résistance de contact est négligeable.

Avantageusement, le matériau composite comprend une matière plastique renforcée par des fibres de carbone.

De préférence, le circuit de courant de défaut comprend majoritairement, par référence à une longueur du circuit, des pièces métalliques de l'aéronef.

Ainsi, le réseau est composé en majeure partie d'éléments métalliques, notamment structurels, de l'aéronef, ce qui lui procure une résistance électrique de maille la plus faible possible.

Avantageusement, le nombre d'équipements électriques et de pièces en matériau composite est de deux au moins, l'aéronef comprenant une structure métallique connectée aux pièces en matériau composite de sorte que le circuit de courant de défaut de chaque équipement passe par la pièce associée et la structure métallique sans passer par la pièce associée à chaque autre équipement.

De préférence, l'aéronef comprend un dispositif de surveillance apte à détecter un courant de défaut relatif à l'équipement.

Ce dispositif permet de protéger l'équipement à l'égard des conséquences possibles de l'apparition d'un courant de défaut.

De préférence, le dispositif est apte à interrompre une alimentation en courant de l'équipement lorsqu'il détecte un courant de défaut relatif à l'équipement.

Avantageusement, le dispositif de surveillance fait partie de l'équipement.

Le dispositif est ainsi dédié à l'équipement. En cas de courant de défaut, il est en mesure d'isoler l'équipement sans interrompre le fonctionnement des autres équipements. Et il ne nécessite pas d'opération de montage spécifique sur chaîne.

Avantageusement, dans le procédé de réalisation précité selon l'invention, on connecte un équipement électrique de l'aéronef à une pièce formée du matériau composite caractérisé au moyen de l'invention et on agence l'aéronef de sorte qu'un circuit de courant de défaut de l'équipement passe par la pièce.

De préférence, on connecte au moins un organe de contact à l'équipement et on assemble l'organe de contact à la pièce au moyen d'un ajustement serré de l'organe avec la pièce.

D'autres caractéristiques et avantages de l'invention apparaîtront encore dans la description suivante d'un mode de mise en oeuvre et d'une application donnés à titre d'exemples non limitatifs en référence aux dessins annexés sur lesquels :

- la figure 1 est une vue en perspective d'un avion fabriqué au moyen d'un matériau composite caractérisé grâce au procédé de l'invention ;
- la figure 2 est un schéma d'une installation de caractérisation selon l'invention ;
- la figure 3 est une courbe illustrant l'évolution de la résistance de l'empilement de l'installation de la figure 2 en fonction de l'effort exercé sur cet empilement ;
- les figures 4 et 5 illustrent deux étapes d'un exemple de mise en oeuvre du procédé de l'invention ;
- la figure 6 montre des courbes illustrant l'évolution de la résistance de couplage en fonction de l'interférence dans les montages des figures 4 et 5.
- la figure 7 est un schéma électrique illustrant la connexion d'un équipement à bord de l'avion de la figure 1 ;
- la figure 8 est une vue de l'équipement et de sa connexion à une partie de la structure de l'avion de la figure 1 ;
- la figure 9 est une vue en coupe de la connexion suivant le plan IX-IX de la figure 8;
- la figure 10 est un schéma électrique illustrant dans une variante le principe d'un dispositif de surveillance ; et
- la figure 11 est un schéma électrique de la connexion de l'équipement intégrant ce dispositif de surveillance.

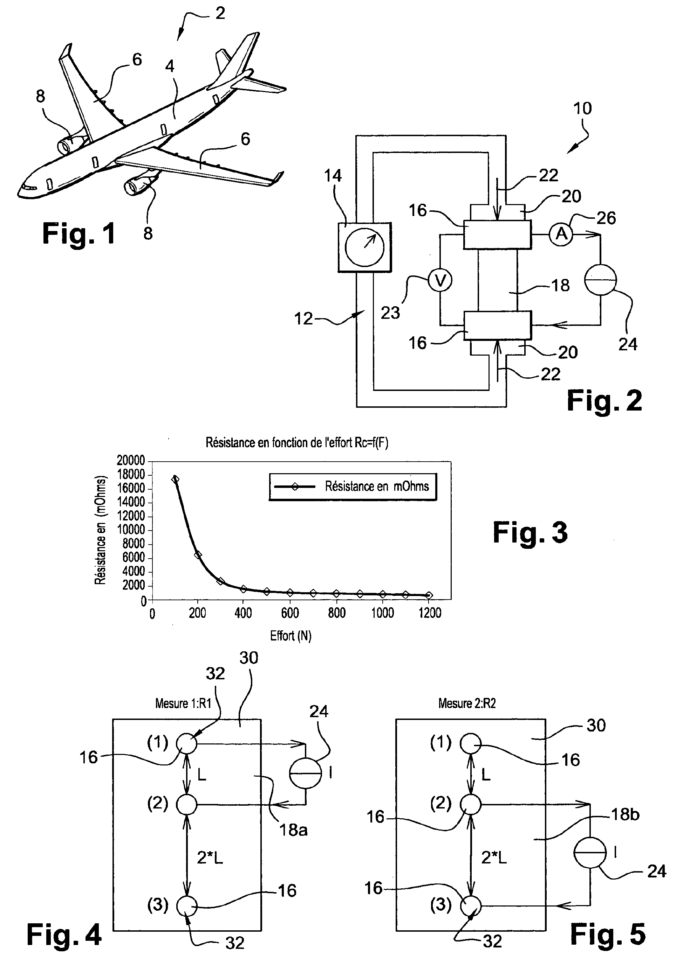

On a illustré à la figure 1 un aéronef 2 qui est ici un aérodyne formant en l'espèce un avion. L'avion comprend un fuselage 4, deux ailes 6 et deux moteurs 8 portés par les ailes dans le présent exemple.

Certaines parties au moins de l'avion telles que le fuselage 4 ou les ailes 6 sont fabriquées au moyen, entre autres, d'au moins un matériau composite. Un tel matériau comprend dans le présent exemple une matière plastique telle qu'une résine époxy formant une matrice dans laquelle sont noyées des fibres telles que des fibres de carbone en l'espèce. Il s'agit ici d'un matériau de type CFRP correspondant à l'acronyme anglais *carbon fiber reinforced plastic* ou matière plastique renforcée par des fibres de carbone.

Nous allons présenter ci-après un mode de mise en oeuvre du procédé de l'invention visant à caractériser électriquement un tel matériau composite et ce au moyen de l'installation 10 illustrée à la figure 2. Cette installation comprend une machine de compression 12 telle qu'une presse. La machine comprend notamment deux platines 20 entre lesquelles est exercé l'effort de compression et un écran 14 permettant de connaître l'effort de compression exercé. L'installation comprend deux cales 16 formées en un métal bon conducteur de l'électricité. De préférence, on utilise un métal ductile, à savoir relativement facile à déformer.

Dans le procédé de l'invention, on utilise une éprouvette 18 en matériau composite sous la forme par exemple d'un élément profilé à section rectangulaire ou circulaire. Il s'agit par exemple d'un barreau de matériau composite formé d'un assemblage de plusieurs plis orientés par exemple selon la séquence 45°/0°/-45°/90°....

On réalise un empilement en disposant l'éprouvette 18 en sandwich entre les deux cales 16 situées aux extrémités longitudinales de l'éprouvette. Cet ensemble est disposé entre deux platines 20 de la machine 12 afin que celles-ci exercent sur les cales 16 deux efforts 22 en sens opposés et dirigés dans la direction de l'empilement, à savoir de l'une à l'autre des cales.

L'installation 10 comprend en outre des moyens de mesure d'une différence de potentiel aux bornes de l'empilement, ces moyens comprenant par exemple un voltmètre 23 relié aux deux cales 16 respectives. L'installation comprend également un générateur de courant 24 apte à alimenter l'empilement en courant électrique via les deux cales. Des moyens de mesure de l'intensité de ce courant, tels qu'un ampèremètre 26, sont disposés en série dans ce circuit.

Grâce à cette installation, on réalise la compression de l'éprouvette 18 entre les deux cales 16. Le cadran 14 permet de connaître l'intensité de l'effort 22 exercé sur cet empilement. La loi d'Ohm permet, à partir des mesures de la tension et de l'intensité obtenues à partir du voltmètre et de l'ampèremètre, de connaître à chaque instant la résistance globale de l'empilement formé par les deux cales et l'éprouvette.

On a ainsi obtenu expérimentalement les résultats illustrés dans le tableau suivant qui indique dans ses deux colonnes respectivement l'effort de compression 22 en newtons et la résistance mesurée en milliOhms :

| Effort de compression en N | Résistance mesurée en mOhms |
|---|---|
| 100 | 17500 |
| 200 | 6700 |
| 300 | 2900 |
| 400 | 1770 |
| 500 | 1410 |
| 600 | 1210 |
| 700 | 1060 |

(suite)

| Effort de compression en N | Résistance mesurée en mOhms |
|:---:|:---:|
| 800 | 944 |
| 900 | 845 |
| 1000 | 766 |
| 1100 | 706 |
| 1200 | 659 |

Ces données sont transcrites dans la courbe illustrée à la figure 3 qui montre en ordonnée l'évolution de la résistance en mOhms en fonction de l'effort exercé en abscisse. On observe que la résistance décroît brutalement environ jusqu'à la valeur d'effort de 400 newtons pour ensuite connaître une asymptote la rapprochant de la valeur de 600 Ohms.

A titre d'exemple, on peut calculer la pression de contact ainsi obtenue pour un effort 22 de 1000 N. La section de l'éprouvette étant en l'espèce de S = 123,41 mm$^2$, on obtient une pression de contact: $\varepsilon$ = F/S = 1000/123,41 = 8 MPa.

Si l'on considère comme négligeable la résistance électrique des cales 16, la résistance globale R ainsi mesurée vérifie :

$$R = 2 * R_c + R_{CFRP} * L$$

où :

- R est la résistance électrique globale de l'empilement résultant des mesures ;
- $R_c$ est la résistance électrique de contact entre l'éprouvette et chacune des cales 16 ;
- $R_{CFRP}$ est la résistance électrique linéique du matériau de l'éprouvette ; et
- L est la longueur de l'éprouvette.

Naturellement, plus l'effort exercé est important, plus la pression de contact est importante. La courbe de la figure 3 montre que, à partir d'un seuil d'effort de compression par exemple fixé à 400 N dans le présent exemple, la résistance électrique de contact $R_c$ peut être considérée comme une constante, voire comme une quantité négligeable. Il en ressort que, à partir de ce seuil, on peut considérer que la valeur de la résistance de contact se trouve minimisée et maîtrisée, ce qui permet de réaliser la caractérisation électrique du matériau composite 18 en lui-même.

Cette caractérisation peut être effectuée de multiples façons. On présente ci-après un exemple à cette fin. En référence aux figures 4 et 5, on utilise deux éprouvettes 18a et 18b qui sont dans cet exemple formées d'un seul tenant sur une même pièce 30 réalisée dans le matériau composite à caractériser. Cette pièce est ici un parallélépipède rectangle. La pièce présente des emplacements 32 pour la réception des cales 16. En l'espèce, ces emplacements sont formés par des alésages ou logements destinés à recevoir chacun une cale 16 réalisée sous la forme d'un insert. Les orifices ont une forme cylindrique à section circulaire de même que les cales 16 dans le présent exemple. Les orifices ont leurs axes parallèles entre eux et débouchent ici sur une même face de la pièce. Les alésages sont identiques dans leurs formes et dans leurs dimensions. En l'espèce, les logements 32 sont au nombre de trois sur la pièce 30. Ils sont alignés et disposés de sorte que la distance L séparant les premier et deuxième logements 32 est la moitié de la distance 2L séparant les deuxième et troisième logements.

On cherche à faire en sorte que chaque éprouvette 18a,18b soit soumise à une pression de contact dépassant un seuil prédéterminé. Pour cela, on dimensionne les orifices et les cales afin de réaliser un ajustement serré entre chaque cale et son alésage. En d'autres termes, on réalise une fixation dite « par interférence ». En l'espèce, la cale présente un diamètre c supérieur à un diamètre e de l'alésage et ceux-ci vérifient la relation:

$$(c - e)/c \geq 0,0025$$

La valeur de 0,0025 permet de rendre négligeable la résistance de contact. On obtiendra des résultats encore meilleurs si l'on réduit encore la résistance de contact en prenant une valeur minimale égale à 0,0030 ou même 0,0035. Naturellement, il est préférable en revanche de limiter le rapport (c-e)/c pour qu'il n'excède pas 0,0083 par exemple, afin de ne pas dépasser les possibilité mécaniques de la matière plastique.

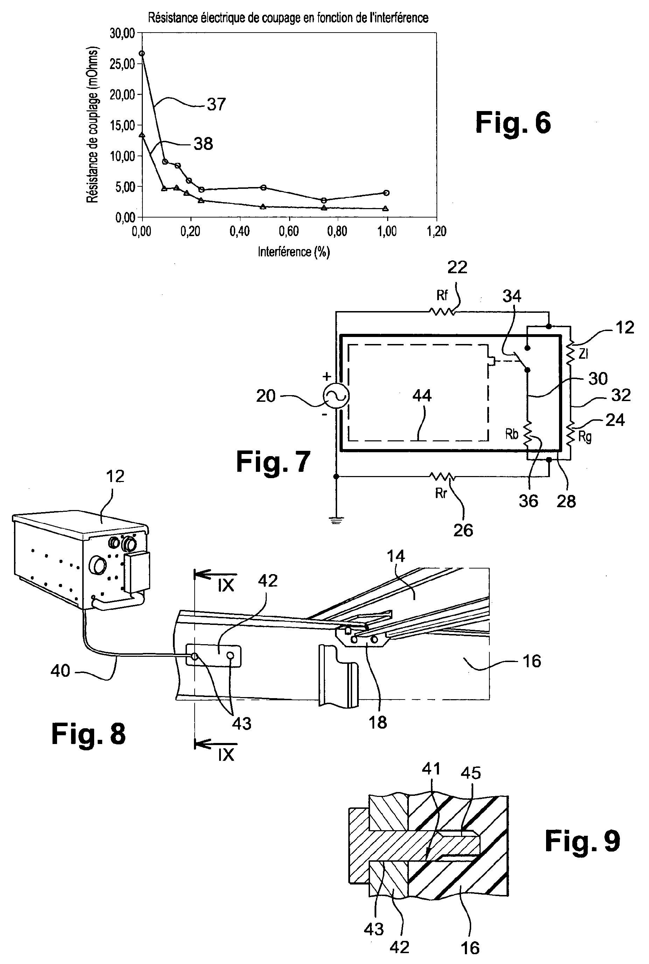

On a illustré à la figure 6 deux courbes expérimentales montrant l'évolution de la résistance de couplage, ou résistance de contact, en ordonnée, en fonction du serrage de l'assemblage entre la cale ou insert et l'alésage qui la reçoit. C'est la grandeur (c-e)/c, désignée par le terme « interférence », mesurée en pourcentage, qui figure en abscisse. La courbe supérieure 37 illustre des résultats d'essais sur un matériau thermoplastique tandis que la courbe inférieure 38 concerne un matériau thermoplastique. On observe que, à partir d'une valeur d'interférence de 0,25%, la résistance de couplage demeure inférieure à 5 mOhms pour les deux matériaux.

On met en oeuvre le procédé selon l'invention de la façon suivante.

On introduit deux cales 16 dans les premier et deuxième orifices 32. L'ajustement étant serré, on s'aidera pour cela d'un outil tel qu'une presse. Grâce aux assemblages mâle-femelle ainsi réalisés, on exerce sur l'éprouvette s'étendant entre les deux cales un effort de compression de l'un à l'autre des logements suivant la direction correspondant à la longueur L. On voit ainsi qu'on met en place une pression radiale entre chaque cale et l'éprouvette de façon à avoir une pression de contact entre la cale et l'alésage du composite. Le choix précité des diamètres permet qu'elle dépasse 100 MPa. On exerce ainsi au moyen de l'installation 10 une pression telle que l'effort obtenu dépasse le seuil prédéterminé pour rendre la résistance de contact sensiblement constante et minimale.

Comme précédemment, on fait passer entre les deux cales 16 un courant que l'on mesure ainsi que la différence de potentiel régnant entre les deux cales, ce qui permet d'obtenir une valeur de résistance $R_1$ pour l'ensemble formé par les deux cales et la partie 18a de la pièce 30 formant la première éprouvette.

En référence à la figure 5, dans une étape ultérieure, on effectue les mêmes opérations, en insérant cette fois les cales 16 dans les deuxième et troisième logements 32. Les mesures d'intensité et de différence de potentiel permettent d'obtenir une valeur de résistance $R_2$ pour l'ensemble des deux cales 16 et de l'éprouvette 18b formé par la partie de la pièce s'étendant entre les deux logements correspondants.

On obtient ainsi le système de deux équations ci-après :

$$R_1 = 2 * R_c + R_{CFRP} * L$$

$$R_2 = 2 * R_c + R_{CFRP} * 2L$$

On a:

- $R_1$ et $R_2$ : la résistance électrique mesurée ;
- $R_c$ : la résistance électrique de contact au niveau de chaque cale;
- $R_{CFRP}$ : la résistance électrique linéique du composite ; et
- L : l'entraxe égal ici à 50 mm.

Sachant que la pression exercée (100 MPa) a été la même dans chaque alésage, dans les étapes des figures 4 et 5, il en est de même pour la grandeur $R_c$. On peut donc l'éliminer pour obtenir la résistance électrique linéique du composite. En combinant ces deux équations, on obtient que:

$$R_{CFRP} = (R_2 - R_1)/L$$

On observera que la cale 16 située dans le deuxième logement 32 peut rester à son emplacement lors du passage de l'étape de la figure 4 à celle de la figure 5, ce qui permet d'améliorer la fiabilité du résultat.

Une ou plusieurs des étapes du procédé de l'invention pourront être commandées au moyen d'un programme d'ordinateur comprenant des instructions de code permettant de commander l'exécution de ces étapes lorsque ce programme est exécuté sur un ordinateur. Ce programme pourra être enregistré sur un support d'enregistrement de données ou encore être mis à disposition sur un réseau de télécommunications en vue de son téléchargement.

Ce principe de caractérisation peut être par exemple appliqué comme suit.

L'avion 2 comprend à bord de nombreux équipements électriques constitués par divers dispositifs et appareils. Il s'agit par exemple de moteurs ou de dispositifs électroniques tels que des ordinateurs. L'un de ces équipements 12 a été illustré à la figure 8.

La structure de l'avion comprend des pièces de structure en métal telles que le rail de sièges 14 illustré à la figure 8. L'avion comprend également des pièces de structure en matériau composite telles que la traverse 16 illustrée à la même figure.

On entend ici par matériau composite un assemblage d'au moins deux matériaux non miscibles mais ayant une forte capacité d'adhésion. Le matériau composite comprend une ossature ou renfort qui assure sa tenue mécanique et une matrice de protection. La matrice est en l'espèce une matière plastique et le renfort est formé par des fibres de carbone. Le matériau est donc ici une matière plastique renforcée par des fibres de carbone. Le rail 14 repose sur la traverse 16 en étant perpendiculaire à elle et est fixé à cette dernière au moyen d'un élément de jonction structural 18.

On a illustré à la figure 7 le schéma électrique de connexion de l'équipement 12 à un générateur de courant 20 à bord de l'avion 2. Ce générateur est ici de type monophasé. L'équipement 12, symbolisé sur le schéma par son impédance ZI, est connecté au pôle positif du générateur au moyen d'un conducteur tel qu'un câble 22 présentant une résistance Rf. Il est par ailleurs relié en direction du pôle négatif du générateur par un conducteur de mise à la masse tel qu'un câble 24 présentant une résistance Rg. Ce câble est lui-même connecté à l'ESN 26 de l'avion 2 qui présente, dans le trajet de retour du courant fonctionnel de l'équipement 12, une résistance Rr. Ces éléments forment le circuit de mise à la masse de l'équipement 12 pour le retour des courants fonctionnels, circuit illustré en traits pleins et référencé 28 sur la figure 7. Il s'agit du trajet normal suivi par le courant électrique fourni par le générateur 20 et alimentant l'équipement 12 lors du fonctionnement normal de ce dernier.

On a illustré sur la figure une branche 30 s'étendant en parallèle à la branche 32 qui porte en série l'équipement 12 et le câble 24. La branche 30 illustre la possibilité d'un court-circuit symbolisé par l'interrupteur 34 qu'elle porte. Lors d'un tel court-circuit, le courant provenant du pôle positif du générateur 20 passe au moins en partie par la branche 30, traverse cet interrupteur en position fermée et suit un circuit de courant de défaut passant par un ensemble 36 symbolisé par la résistance Rb, puis par l'ESN 26.

L'élément 36 est constitué en l'espèce, comme illustré à la figure 8, en connectant l'équipement 12 à la pièce 16 en matériau composite au moyen d'un câble 40 connecté lui-même à un élément métallique 42 telle qu'une platine, fixé à la pièce 16. Cette fixation est effectuée au moyen de plusieurs organes métalliques tels que des vis 43 qui traversent chacune la platine 42 et pénètrent dans la pièce 16.

Comme illustré à la figure 9, on réalise un ajustement serré de chaque vis 43 avec la pièce 16. Pour cela, la vis 43 présente en l'espèce sur sa tige un tronçon cylindrique lisse en contact avec la pièce 16. Ici le filet 45 ne s'étend donc que sur une portion de la tige de la vis, sur son tronçon d'extrémité distale. La vis est reçue dans un alésage calibré 41 de la pièce 16 réalisé avant l'introduction de la vis. Le diamètre $v$ de la vis 43 et le diamètre $e$ de l'alésage vérifient en l'espèce:

$$(v - e)/v \geq 0,0025$$

Un tel ajustement serré permet une mise en pression de la face de la tige de la vis contre la face de l'alésage en composite. On met donc en place une pression radiale entre la vis et la pièce de façon à avoir une pression de contact entre la vis et l'alésage qui dépasse 100 MPa. Ce seuil permet de rendre la résistance électrique de contact entre la vis et la pièce sensiblement constante et minimale.

La valeur de 0,0025 permet de rendre négligeable la résistance de contact. On obtiendra des résultats encore meilleurs si l'on réduit encore la résistance de contact en prenant une valeur minimale égale à 0,0030 ou même à 0,0035. Naturellement, il est préférable en revanche de limiter le rapport (v-e)/v pour qu'il n'excède pas 0,0083 par exemple, afin de ne pas dépasser les possibilité mécaniques de la matière plastique.

L'équipement 12 se trouve ainsi électriquement connecté à la pièce 16, laquelle est reliée via le rail 14 à l'ESN 26 de l'avion. L'élément 36 illustré sur le circuit de la figure 7 est donc formé ici par le câble 40, la platine 42, les vis 43 et la portion de la pièce 16 traversée par le courant de défaut le cas échéant.

Ainsi, en présence d'un court-circuit symbolisé par la fermeture de l'interrupteur 34, le courant suit non plus la branche 32 mais la branche 30. Le courant de défaut se trouve donc évacué par un circuit passant notamment par la pièce 16 en matériau composite. Ce circuit 44 de courant de défaut a été illustré en traits pointillés sur la figure 7.

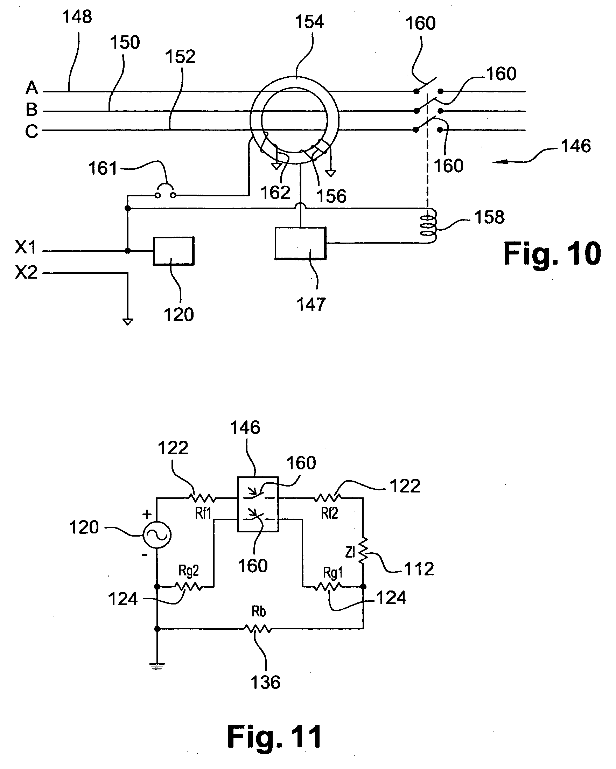

Dans une variante illustrée aux figures 10 et 11, on peut envisager de protéger l'équipement 12 à l'égard des courants de défaut au moyen d'un dispositif de surveillance 46. La constitution et le fonctionnement d'un tel dispositif ont été illustrés à la figure 10 dans l'hypothèse d'une alimentation en courant de type triphasé. Le principe demeure toutefois similaire en présence d'un courant monophasé. On a ainsi désigné par des branches 48, 50 et 52 les trois brins A, B et C d'une alimentation de bord en courant triphasé. Le dispositif 46 comprend un tore 54 traversé par ces trois branches. Une alimentation en courant monophasé 20 a été illustrée avec son pôle positif désigné par la branche x1 tandis que la masse est illustrée avec la branche x2. Le dispositif 46 comprend un module central de commande 47, un enroulement 56 autour du tore 54 connecté au module 47 et à la masse et une bobine 58 connectée à l'alimentation 20 et au module 47. Cette bobine, lorsqu'elle est alimentée en courant, actionne des interrupteurs 60 disposés sur chacune des branches A, B et C et permettant l'interruption du courant dans chacune d'elles.

En régime de fonctionnement normal, à savoir ici en mode triphasé équilibré, la somme des courants circulant dans les phases A, B et C est nulle. Par conséquent, aucun flux magnétique ne circule dans le tore 54. Les interrupteurs 60 restent donc fermés.

En cas de défaillance, par exemple lorsqu'apparaît un court-circuit au niveau de la charge alimentée par ce courant triphasé, la somme des courants dans les phases A, B et C n'est plus nulle de sorte qu'un flux magnétique prend naissance dans le tore 54. Ce flux génère un courant dans l'enroulement 56, courant qui est transmis au module 47. Ce dernier commande alors l'alimentation en courant du bobinage 58 pour l'ouverture des interrupteurs 60, ce qui interrompt la circulation du courant dans les branches A, B et C.

Le dispositif 46 comprend une branche de test s'étendant en parallèle à la branche alimentant le bobinage 58. La branche de test est reliée à la branche x1 de l'alimentation 20 et comprend un bouton 61 et un enroulement 62 autour du tore 54. Cet enroulement est aussi relié à la masse. Lorsqu'on appuie sur le bouton 61, l'enroulement 62 se trouve alimenté en courant à partir du générateur 20, ce qui provoque l'apparition d'un flux magnétique dans le tore 54 et l'apparition d'un courant dans l'enroulement 56. Comme précédemment, le courant dans chacune des branches A, B et C se trouve interrompu.

On a illustré à la figure 11 ce principe pour la connexion de l'équipement 12. On retrouve ainsi ce dernier alimenté en courant par le pôle positif du générateur 20 au moyen d'un câble 22 ayant des résistances Rf1 et Rf2.

En mode de fonctionnement normal, le courant est évacué vers la masse de l'avion à travers un câble 24 de résistances Rg1 et Rg2. Le dispositif de surveillance 46 est monté sur chacun de ces câbles 22 et 24. En présence d'un courant de défaut, le courant passe non plus par le câble 22 mais par le circuit de défaut comprenant l'élément 36 de résistance Rb.

Le dispositif de surveillance 46 comprend un interrupteur 60 pour chacun des câbles 22 et 24. En mode de fonctionnement normal, ces deux interrupteurs sont fermés de sorte que les câbles 22 et 24 sont passants. En cas de défaut, du courant passe par le circuit de défaut du câble 36, ce qui engendre un déséquilibre dans les courants traversant les câbles 22 et 24. En conséquence, le dispositif de surveillance 46 provoque l'ouverture des deux interrupteurs 60, interrompant ainsi toute connexion de l'équipement 12 avec le générateur. L'équipement 12 se trouve ainsi protégé.

Le principe illustré à la figure 10 est applicable quel que soit le mode d'alimentation en courant, à savoir courant alternatif ou courant continu.

Le calcul du dimensionnement des différents éléments, notamment le calibre des interrupteurs 60, sera fonction de l'impédance Rb qui est elle-même liée à la qualité de la résistance de contact entre les vis 43 et la pièce 16 et à la résistance de cette dernière, grandeur également importante pour l'injection du courant dans le matériau composite.

De même, l'agencement devra permettre de manière permanente la circulation d'un courant relativement élevé.

On pourra par exemple positionner le dispositif 46 au niveau des contacteurs des routes d'alimentation des équipements dont fait partie l'équipement 12. Mais ce mode de réalisation a pour inconvénient d'entraîner la coupure de l'alimentation électrique de tous les équipements reliés au même contacteur lorsqu'un seul des équipements présente un courant de défaut.

Il est donc préférable de développer la fonctionnalité du dispositif 46 au niveau de chaque équipement en lui-même. On peut dès lors prévoir un dispositif de surveillance dédié à chaque équipement pour le protéger des surintensités. Ce dispositif de surveillance peut par exemple prendre la forme d'un contacteur de puissance à état solide ou *solid state power contact.*

On comprend que chacun des équipements de l'avion pourra être connecté à une pièce 16 distincte de celle à laquelle est connecté au moins un autre équipement de l'avion, voire dédiée à ce seul équipement, ces équipements utilisant par ailleurs le même ESN.

On voit que cette application évite de devoir compliquer et alourdir le réseau de retour des courants de défaut.

Bien entendu, on pourra apporter à l'invention de nombreuses modifications sans sortir du cadre de celle-ci.

On pourra combiner des mesures qui n'ont pas été effectuées sur les mêmes pièces.

Sachant que la résistance de contact est éliminée par la combinaison des équations, on pourra effectuer les mêmes opérations avec un effort inférieur au seuil précité.

Les logements 32 ne seront pas nécessairement alignés.

L'invention peut servir à obtenir d'autres grandeurs qu'une valeur de résistance, par exemple une valeur de conductance ou d'impédance.

## Revendications

**1.** Procédé de caractérisation électrique d'un matériau composite pour la fabrication d'un aéronef (2), dans lequel

- on comprime deux cales (16) contre au moins une éprouvette (18 ; 18a, 18b) réalisée en un matériau composite en réalisant un ajustement serré entre au moins une des cales (16) et un orifice (32) de la ou chaque éprouvette (18a,18b),
- on détermine une valeur de résistance électrique (R ; R1, R2) de l'ensemble formé par les cales et l'éprouvette, et

- on déduit de la valeur de resistance électrique (R, $R_1$, $R_2$) une valeur de résistance électrique ($R_{CFRP}$) du matériau composite.

2. Procédé selon la revendication précédente dans lequel on effectue la compression de sorte que la ou chaque éprouvette (18a,18b) est soumise à une pression de contact dépassant un seuil prédéterminé.

3. Procédé selon la revendication précédente dans lequel la cale présente un diamètre supérieur à un diamètre de l'orifice, le diamètre c de la cale et le diamètre e de l'orifice vérifiant de préférence :

$$(c - e)/c \geq 0,0025$$

4. Procédé selon l'une quelconque des revendications précédentes dans lequel on effectue la compression sur au moins deux éprouvettes (18a,18b) réalisées en un même matériau composite, et de préférence on effectue successivement la compression des deux éprouvettes (18a,18b) en conservant inchangé l'emplacement de l'une des cales (16).

5. Procédé selon la revendication précédente dans lequel les deux éprouvettes (18a,18b) font partie d'une même pièce (30).

6. Procédé selon la revendication précédente dans lequel on dispose trois cales (16) sur la pièce (30) à des emplacements (32) alignés entre eux.

7. Procédé de fabrication d'un aéronef (2) dans lequel on met en oeuvre un procédé selon l'une quelconque des revendications précédentes et on fabrique l'aéronef au moyen du matériau et en tenant compte de la valeur de résistance électrique ($R_{CFRP}$) du matériau obtenue par ce procédé, et de préférence on connecte un équipement électrique (112) de l'aéronef à une pièce (116) formée du matériau composite et on agence l'aéronef de sorte qu'un circuit de courant de défaut (144) de l'équipement passe par la pièce.

8. Installation (10) de caractérisation électrique d'un matériau composite pour la fabrication d'un aéronef (2), l'installation comprenant :

    - au moins deux cales (16), et
    - des moyens (12) pour comprimer les deux cales contre une éprouvette (18, 18a, 18b),

    **caractérisée en ce que** les moyens sont agencés de sorte que la compression a lieu en réalisant un ajustement serré entre au moins une des cales (16) et un orifice (32) de la ou chaque éprouvette (18a, 18b), **en ce que** l'installation comprend des moyens (23, 24, 26) pour déterminer une valeur de résistance électrique (R, $R_1$, $R_2$) de l'ensemble formé par les cales et l'éprouvette, et **en ce que** l'installation comprend des moyens pour déterminer à partir de cette valeur de résistance électrique (R, $R_1$, $R_2$) une valeur de résistance électrique ($R_{CFRP}$) du matériau composite.

**Patentansprüche**

1. Verfahren zur elektrischen Charakterisierung eines Verbundmaterials für die Herstellung eines Flugzeugs (2), bei dem

    - zwei Füllstücke (16) gegen mindestens einen Prüfkörper (18; 18a, 18b), der aus einem Verbundmaterial hergestellt ist, gepresst werden, indem eine formschlüssige Verbindung zwischen mindestens einem der Füllstücke (16) und einer Öffnung (32) des oder jedes Prüfkörpers (18a, 18b) realisiert wird,
    - ein Wert des elektrischen Widerstands (R; R1, R2) der Anordnung bestimmt wird, die aus den Füllstücken und dem Prüfkörper gebildet ist, und
    - aus dem Wert des elektrischen Widerstands (R, R1, R2) ein Wert des elektrischen Widerstands (RCFRP) des Verbundmaterials abgeleitet wird.

2. Verfahren nach dem vorhergehenden Anspruch, bei dem das Pressen so erfolgt, dass der oder jeder Prüfkörper (18a, 18b) mit einem Kontaktdruck beaufschlagt wird, der einen vorbestimmten Schwellwert übersteigt.

3. Verfahren nach dem vorhergehenden Anspruch, bei dem das Füllstück einen Durchmesser aufweist, der größer ist als der Durchmesser der Öffnung, wobei der Durchmesser c des Füllstücks und der Durchmesser der Öffnung e vorzugsweise Folgendes erfüllen:

$$(c - e)/c \geq 0,0025$$

4. Verfahren nach einem der vorhergehenden Ansprüche, bei dem der Druck auf mindestens zwei Prüfkörper (18a, 18b) erfolgt, die aus einem gleichen Verbundmaterial hergestellt sind, und vorzugsweise nacheinander das Pressen der zwei Prüfkörper (18a, 18b) erfolgt, indem die Position eines der Füllstücke (16) unverändert belassen wird.

5. Verfahren nach dem vorhergehenden Anspruch, bei dem die zwei Prüfkörper (18a, 18b) einem gleichen Teil (30) zugehörig sind.

6. Verfahren nach dem vorhergehenden Anspruch, bei dem drei Füllstücke (16) auf dem Teil (30) in Positionen (32) angeordnet werden, die miteinander fluchten.

7. Verfahren zur Herstellung eines Flugzeugs (2), bei dem ein Verfahren nach einer der vorhergehenden Ansprüche ausgeführt wird und das Flugzeug mit Hilfe des Materials und unter Berücksichtigung des Wertes des elektrischen Widerstands (RCFRP) des Materials, das durch dieses Verfahren erhalten wird, hergestellt wird und vorzugsweise ein elektrisches Gerät (112) des Flugzeugs mit einem Teil (116), das aus dem Verbundmaterial gebildet ist, verbunden wird und das Flugzeug so ausgebildet wird, dass ein Fehlerstromkreis (144) des Geräts durch das Teil verläuft.

8. Anlage (10) zur elektrischen Charakterisierung eines Verbundmaterials für die Herstellung eines Flugzeugs (2), wobei die Anlage Folgendes umfasst:

   - mindestens zwei Füllstücke (16) und
   - Einrichtungen (12), um die zwei Füllstücke gegen einen Prüfkörper (18, 18a, 18b) zu pressen,

   **dadurch gekennzeichnet, dass** die Einrichtungen so ausgebildet sind, dass der Druck erfolgt, indem eine formschlüssige Verbindung zwischen mindestens einem der Füllstücke (16) und einer Öffnung (32) des oder jedes Prüfkörpers (18a, 18b) realisiert wird, dass die Anlage Einrichtungen (23, 24, 26) umfasst, um einen Wert des elektrischen Widerstands (R, R1, R2) der Anordnung zu bestimmen, die aus den Füllstücken und dem Prüfkörper gebildet ist, und dass die Anlage Einrichtungen umfasst, um ausgehend von diesem Wert des elektrischen Widerstands (R, R1, R2) einen Wert des elektrischen Widerstands (RCFRP) des Verbundmaterials zu bestimmen.

## Claims

1. A method of electrically characterizing a composite material for manufacturing an aircraft (2), wherein:

   - compressing two spacers (16) against at least one test piece (18; 18a, 18b) made of a composite material by implementing a tight fit between at least one of the spacers (16) and an orifice (32) in the or each test piece (18a, 18b);
   - determining an electrical resistance value (R; R1, R2) for the assembly formed by the spacers and the test piece; and
   - deducing from said electrical resistance value a value (R, R1, R2) for the electrical resistance ($R_{CFRP}$) of the composite material.

2. A method according to the preceding claim, wherein the compression is performed in such a manner that the or each test piece (18a, 18b) is subjected to a contact pressure exceeding a predetermined threshold.

3. A method according to the preceding claim, wherein the spacer presents a diameter greater than the diameter of the orifice, the diameter $\underline{c}$ of the spacer and the diameter $\underline{e}$ of the orifice preferably satisfying the following equation:

$$(c - e)/c \geq 0.0025$$

4.  A method according to any one of the preceding claims, wherein the compression is performed on at least two test pieces (18a, 18b) made of the same composite material, and preferably the compression is performed in succession on the two test pieces (18a, 18b) while conserving the location of one of the spacers (16) unchanged.

5.  A method according to the preceding claim, wherein the two test pieces (18a, 18b) form portions of a single part (30).

6.  A method according to the preceding claim, wherein three spacers (16) are arranged on the part (30) at locations (32) that are mutually in alignment.

7.  A method of manufacturing an aircraft (2), wherein a method according to any one of the preceding claims is implemented and the aircraft is manufactured by means of the material and by taking account of the electrical resistance value ($R_{CFRP}$) of the material as obtained by said method, and preferably electrical equipment (112) of the aircraft is connected to a part (116) made of the composite material, and the aircraft is arranged in such a manner that a fault current circuit (144) for the equipment passes via the part.

8.  An installation (10) for electrically characterizing a composite material for use in manufacturing an aircraft (2), wherein the installation comprises:

    - at least two spacers (16);
    - means (12) for compressing the two spacers against a test piece (18, 18a, 18b),

    **characterized in that** the means are arranged in such a manner that the compressing takes place by implementing a tight fit between at least one of the spacers (16) and an orifice (32) of the or each test piece (18a, 18b), **in that** the installation includes means (23, 24, 26) for determining an electrical resistance value for the assembly constituted by the spacers and the test piece, and **in that** the installation includes means for determining from this electrical resistance value (R, R1, R2) a value for the electrical resistance ($R_{CFRP}$) of the material composite.

# Fig. 1

# Fig. 2

Résistance en fonction de l'effort Rc=f(F)

# Fig. 3

Résistance en (mOhms)

Effort (N)

Résistance en mOhms

Mesure 1:R1

(1)

(2)

L

2*L

(3)

# Fig. 4

Mesure 2:R2

(1)

(2)

L

2*L

(3)

# Fig. 5

Fig. 6

Fig. 7

Fig. 8

Fig. 9

**Fig. 10**

**Fig. 11**

**EP 2 459 995 B1**

## RÉFÉRENCES CITÉES DANS LA DESCRIPTION

**Documents brevets cités dans la description**

- DE 10234172

- FR 2630545